# EUROPEAN PATENT APPLICATION

(11) **EP 2 299 770 A1**
(43) Date of publication of application: **23.03.2011**
(21) Application number: 09765418.0
(22) Date of filing: 19.06.2009
(51) Int. Cl.: H04W 76/06

(54) **METHOD, APPARATUS AND SYSTEM FOR ENABLING TO RELEASE PDN CONNECTIONS**

(30) Priority: 20.06.2008 CN 200810115367
(71) Applicant: Da Tang Mobile Communications Equipment Co., Ltd., Beijing 100083 (CN)
(72) Inventor: XIONG, Chunshan, Haidian District Beijing 100083 (CN)
(74) Representative: Heine, Christian Klaus
(86) International application number: PCT/CN2009/072358
(87) International publication number: WO 2009/152779

(57) **Abstract**

A method for releasing Packet Data Network (PDN) connections includes: when the subscription data of the user in Home Subscriber Server (HSS) changes, the HSS notifies Mobility Management Entity (MME) to trigger releasing of the PDN connections (201); the MME requests Serving Gateway (GW) and PDN Gateway (PDN GW) to delete all bearers connected to the PDN according to the notice of the HSS (202); the MME then requests the UE (UE) to deactivate all bearers connected to the PDN (203). An apparatus and a system for releasing PDN connections are also provided in the present invention. The method, apparatus and system according to the present invention solve the problem that UE is unable to initiate the releasing process of the PDN connections when the subscription data of the users changes, in addition, solve the problem of rebuilding a Default Access Point Name (APN) connection when the Default APN of the UE is deleted at the same time. And the change for the current system is small, while the system performance is improved.

## Description

### Field of the Invention

The present invention relates to the technical field of mobile communication, in particular, to a method, apparatus and system for releasing PDN connections.

### Background of the Invention

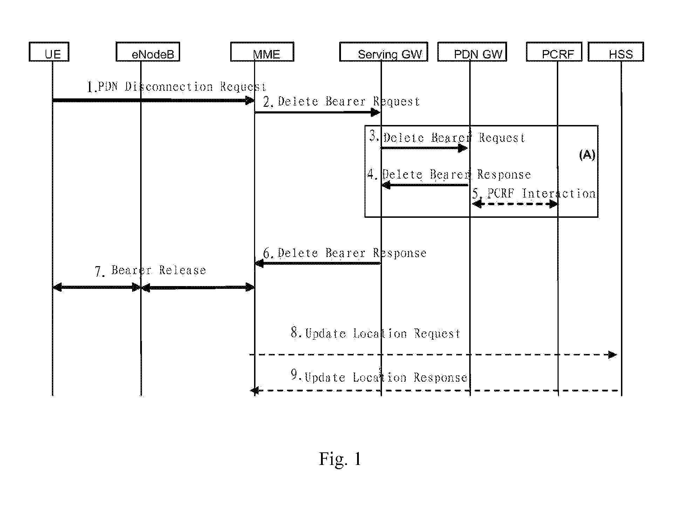

In the current mobile communication systems, it is usually the UE (User Equipment) that initiates the releasing process of the PDN (Packet Data Network) connections when the PDN Connection needs to be released. This releasing process has been defined in Chapter 5.10.3 in the standard TS23.401v8.2.0, and, as shown in Figure 1, includes the following steps:
1. The UE sends the PDN Disconnection Request (LBI) message to the MME (Mobility Management Entity); wherein the LBI indicates the default bearer of the disconnected PDN;
2. After the MME receives the PDN Disconnection Request message, it sends the Delete Bearer Request (TEID, LBI) message to the Serving GW (Serving Gateway) to request to delete all the EPS (Evolved Packet System) bearers connected to this PDN;
3. After the Serving GW receives the Delete Bearer Request message, it sends the Delete Bearer Request (TEID, LBI) message to the PDN GW (Packet Data Network Gateway) to request to delete all the EPS bearers connected to this PDN;
4. After the PDN GW deletes all the EPS bearers connected to this PDN, it returns the Delete Bearer Response message back to the Serving GW;
5. The PDN GW interacts with the PCRF (Policy and Charging Rules Function) to indicate that the EPS bearers are released when the PCRF is applied to this PDN network;
6. After the Serving GW receives the returned Delete Bearer Response message, it sends the Delete Bearer Response message to the MME;
7. After the MME receives the returned Delete Bearer Response message, it initiates the eNodeB (base station) to deactivate all bearers connected to this PDN; and after the eNodeB releases corresponding wireless bearers, it returns the deactivate acknowledgement message back to the MME;
8. If the subscription data of the user indicates to allow the UE to handover from the 3GPP (Third Generation Partnership Project) access technology to the Non-3GPP access technology, the MME then sends the Update Location Request message to the HSS (Home Subscriber Server), so as to request the HSS to delete the PDN GW address information of the APN (Access Point Name) corresponding to this PDN; and
9. After the HSS deletes the address information of the PDN GW of a given APN according to the received Update Location Request message, it returns the Update Location Response message to the MME.

However, it should be noted that when the subscription data of the user in the HSS changes, especially when the APN currently used by the UE is deleted while the UE is using this APN, the UE is unable to initiate the releasing process of the PDN connections according to the current method standard, i.e. the PDN connections cannot be released. Therefore, the new solution is required.

### Summary of the Invention

Viewing the above mentioned, the problem solved by the present invention is to provide a method, apparatus and system for releasing PDN connections, therefore, the PDN connections can be released when the subscription data of the user in the HSS changes.

In order to solve the above problem, the technical solutions provided in the present invention are as follow:

A method for releasing PDN connections including the following steps:

The Home Subscriber Server HSS notifies a Mobility Management Entity MME to trigger the releasing of Packet Data Network PDN connections when subscription information of a user in the HSS changes;

The MME requests a Serving Gateway and a Packet Data Network Gateway to delete all bearers connected to the PDN according to a notification from the HSS; and

The MME requests UE to deactivate all bearers connected to the PDN.

Preferably, the step of the MME requesting the UE to deactivate all bearers connected to the PDN includes:

The MME initiates the request to the base station to delete all wireless access bearers connected to the PDN and simultaneously initiates the request to the UE to deactivate all bearers connected to the PDN;

The base station releases corresponding wireless access bearers according to this delete request;

The UE returns the response back to the MME via the base station after the UE deletes corresponding bearer context according to this deactivation request.

Preferably, the MME sends a Deactivate Bearer Request message of Non-Access Stratum to the UE via the base station to initiate a Deactivate Bearer Request; the Deactivate Bearer Request message is piggybacked in an S1-MME interface message of a request initiated by the MME to the base station to delete all wireless access bearers connected to the PDN;

The base station requests the UE to delete corresponding wireless resource by sending the Wireless Resource Configuration Request message to the UE; and the Deactivate Bearer Request message is piggybacked in the Wireless Resource Configuration Request message;

The UE returns the response by sending the Wireless Resource Configuration Response message to the base station; the UE sends the Deactivate Bearer Response message of the Non-Access Stratum to the MME via the base station, and the Deactivate Bearer Response message is piggybacked in the Wireless Resource Configuration Request message;

The base station notifies the MME, by sending the S1-MME interface response message to the MME, that the deletion of all wireless access bearers connected the PDN has been completed; and the Deactivate Bearer Response message of the Non-Access Stratum sent from the UE to the MME is included in the S1-MME interface response message sent from the base station to the MME.

Preferably, the step of the MME requesting the UE to deactivate all bearers connected to the PDN includes:

The MME and the UE complete the Evolved Packet System Bearer Context synchronization when the MME and the UE enter into a connected state from an idle mode,

In the Evolved Packet System Bearer Context synchronization procedure, the UE deletes all corresponding Bearer Context connected to the PDN according to the request of the MME.

Preferably, the method further includes the following step:

The UE initiates a PDN connection request message when a Default Access Point Name of the UE is deleted, the request message including a Default Access Point Name Indicating flag.

Preferably, the HSS sends the Insert Subscriber Data message to the current MME of the UE so as to notify the MME that the subscription data of the user in the HSS has been changed.

Preferably, the step of the MME requesting the Serving GW and PDN GW to delete all bearers connected to the PDN includes the following steps:

The MME sends the Delete Bearer Request message to the Serving GW to request to delete all bearers connected to the PDN;

The Serving GW sends the Delete Bearer Request message to the PDN GW to request to delete all bearers connected to this PDN;

The PDN GW receives the request message of the Serving GW and returns the Delete Bearer Response message back to the Serving GW after all bearers connected to the PDN are deleted; and

the Serving GW returns the Delete Bearer Response message back to the MME after the Serving GW receives the response message of the PDN GW so as to notify the MME that the Serving GW and PDN GW have deleted all bearers connected to the PDN.

A Home Subscriber Server HSS comprises a memory unit and a triggering unit; wherein

The memory unit is configured to store the subscription data of the user and to notify the triggering unit when the subscription data of the user changes; and

The triggering unit is configured to trigger the releasing of the PDN connections according to the notice of the memory unit.

Preferably, the triggering unit further comprises a first receiving unit and a first sending unit; wherein the first receiving unit is configured to receive the notice from the memory unit; and

The first sending unit is configured to send the Insert Subscriber Data message to the current MME of the UE according to the notice received by the first receiving unit so as to trigger the releasing of the PDN connections.

A Mobility Management Entity MME comprises a first requesting unit and a second requesting unit, wherein,

The first requesting unit is configured to request the Serving GW and the Packet Data Network Gateway to delete all bearers connected to the PDN according to the notice triggering the releasing of PDN connections sent from the HSS, and to notify the second requesting unit after the request operation is completed by the Serving GW and the Packet Data Network Gateway; and

The second requesting unit is configured to request the UE to deactivate all bearers connected to the PDN and to request the base station to delete all wireless access bearers connected to the PDN according to the notice of the first requesting unit.

Preferably, the second requesting unit further comprises a second sending unit and a second receiving unit; wherein, the second sending unit is configured to send the request to the base station to delete all wireless access bearers connected to the PDN so as to notify the base station to release corresponding wireless access bearers; and simultaneously to send the request to the UE to deactivate all bearers connected to the PDN so as to notify the UE to delete all bearers connected to the PDN; and

The second receiving unit is configured to receive a response that the base station deletes all wireless access bearers connected to the PDN and a response that returned through the base station after the UE deletes all bearers connected to the PDN.

A system for releasing PDN connections comprises the HSS according to any one of the above and the MME according to any one of the above.

It can be seen that the method, apparatus and system in the present invention, by triggering the releasing process of the PDN connections by the HSS, solve the problem that the UE is unable to initiate the releasing process of the PDN connections when the subscription data of the user changes is solved; in addition, solve the problem of rebuilding a Default APN connection when the Default APN of UE is deleted at the same time. And the change for the current system is small, while the system performance is improved.

### Description of the Accompanying Figures

Figure 1 is a schematic view of the releasing process of the PDN connections initiated by the UE in the prior art;
Figure 2 is a schematic view of the method process in Embodiment 1 of the present invention;
Figure 3 is a schematic view of the releasing process of the PDN connections triggered by the HSS in Embodiment 2 of the present invention;
Figure 4 is a schematic view of the releasing process of the PDN connections triggered by the HSS in Embodiment 3 of the present invention;

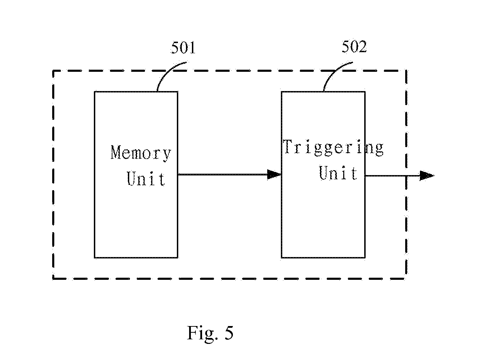

Figure 5 is a schematic view of the HSS structure in Embodiment 4 of the present invention; and

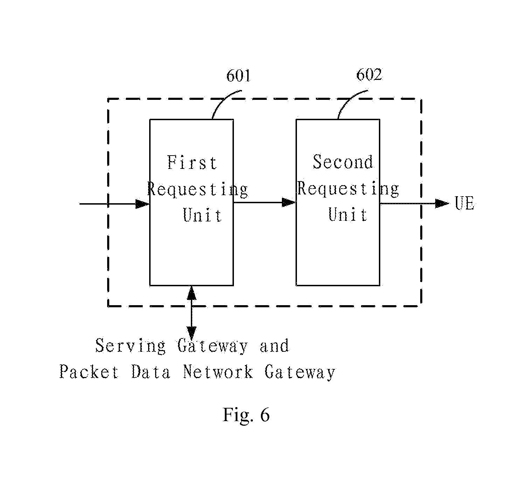

Figure 6 is a schematic view of the MME structure in Embodiment 5 of the present invention.

### Detailed Descriptions of Exemplary Embodiments

The basic idea of the present invention lies in: when the subscription data of the user in the HSS changes, especially when the APN currently used by the UE is deleted, the HSS triggers the releasing process of the PDN connections according to the obtained subscription data of the user that is modified, and the problem can be solved that the releasing process of the PDN connections can hardly be initiated when the subscription data of the user changes.

In order to make the person skilled in the art better understand the present invention, the method in the present invention will be illustrated in detail with reference to the accompanying drawings and the exemplary embodiments.

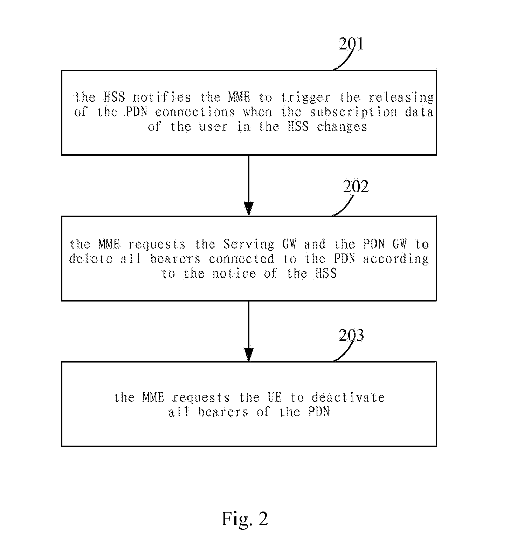

A method for releasing PDN connections is provided in Embodiment 1 of the present invention. As shown in Figure 2, the method includes the following steps:

Step 201: when the subscription data of the user in the HSS changes, the HSS notifies the MME to trigger releasing of the PDN connections;

Typically, when the subscription data of the user in the HSS changes, especially when the APN currently used by the UE is deleted, the HSS sends the Insert Subscriber Data message to the current MME of the UE to notify this MME that the subscription data of the user in the HSS has been changed (for instance, the APN currently used by the UE is deleted), so as to trigger the disconnecting (releasing) procedure of the PDN connections and to solve the problem that the UE is unable to initiate the releasing process of the PDN connections in the existing methods of the prior art in this situation;

Wherein, the HSS also can notify the MME that the subscription data of the user has been changed in other ways, so as to trigger the disconnection of the PDN connections and redundant descriptions will not be repeated.

Step 202: the MME requests the Serving GW and the PDN GW to delete all bearers connected to the PDN depending on the notice message of the HSS;

If the MME finds that one APN currently used by the UE is deleted by the subscription data after the MME receives the notice (e.g. Insert Subscriber Data information) of the HSS" the MME then sends the Delete Bearer Request (TEID, LBI) message to the Serving GW to request to delete all EPS bearers connected to this PDN; the Serving GW sends the Delete Bearer Request (TEID, LBI) message to the PDN GW according to the request from the MME to request to delete all EPS bearers connected to this PDN; and after the PDN GW receives the request from the Serving GW and deletes all EPS bearers connected to the PDN, it returns the Delete Bearer Response message back to the Serving GW, and after the Serving GW receives the response message, it returns the Delete Bearer Response message back to the MME so as to notify the MME that the Serving GW and PDN GW have deleted all EPS bearers connected to the PDN; wherein when the PCRF is applied to this PDN network, the PDN GW will interact with the PCRF to indicate to release all EPS bearers;

It should be noted that the person skilled in the art should understand that the requested Delete Bearer Request and Delete Bearer Response in the information interaction process mentioned above are not merely limited to the Delete Bearer Request message and Delete Bearer Response message, but also can be realized in other ways or with other messages, and redundant descriptions will not be repeated.

Step 203: the MME then requests the UE to deactivate all bearers connected to the PDN and requests the eNodeB to delete the wireless access bearers corresponding to all bearers connected to the PDN;

Typically, in the present embodiment, the step that the MME requests the UE to deactivate all bearers connected to the PDN and requests the eNodeB to delete the wireless access bearers corresponding to all bearers connected to the PDN includes but not limits to the following two conditions:
1) If the NAS (Non-Access Stratum) signaling connection is present between the UE and MME, the MME then firstly initiates the request message to the eNodeB to delete the wireless access bearers corresponding to all bearers connected to this PDN, meanwhile, the MME initiates the request to the UE to deactivate all bearers connected to the PDN; typically, the step that the MME initiates the request message to the eNodeB to delete the wireless access bearers corresponding to all bearers connected to this PDN can be realized by the SAE (System Architecture Evolution) Bearer Release Command message. The MME initiates the Deactivate Bearer Request by sending the Deactivate Bearer Request message of the NAS to the UE via the eNodeB. Wherein the Deactivate Bearer Request message is included in the SAE Bearer Release Command message of the S1-MME interface, i.e. the Deactivate Bearer Request is delivered to the UE in the piggyback manner. The method is realized with the two messages, which can of course be realized with other messages, and the present example is not limited to these two messages;

After the eNodeB receives the message requesting to delete the wireless access bearers from the MME, it sends the RRC (Wireless Resource Configuration) message to the UE to request the UE to delete corresponding wireless resource. Meanwhile, the Deactivate Bearer Request message sent from the MME to the UE is piggybacked in this RRC message.

After the UE deletes the corresponding bearer text according to the request from the eNodeB, it returns the RRC (Wireless Resource Configuration Response) message back to the eNodeB, meanwhile, the UE deletes all bearers connected to this PDN according to the Deactivate Bearer Request message which is sent from the MME to the UE and piggybacked by the eNodeB in a RRC message, and then it returns the Deactivate Bear Response message back to the MME. This Wireless Resource Configuration Response message piggyback the NAS Deactivate Bearer Response message sent from the UE to the MME;

The eNodeB sends the SAE Bearer Release Complete message to the MME according to the response message returned from the UE to notify the MME that the deletion of all EPS bearers connected to the PDN has been completed. Meanwhile, this message piggyback the Deactivate Bearer Response message of the UE;
2) If the NAS (Non-Access Stratum) signaling connection is not establisehd between the UE and MME, the MME then cannot directly initiate the request message to the eNodeB to deactivate all bearers connected to this PDN. And the UE and MME perform the EPS Bearer Context synchronization (this synchronization process can be realized in a manner in the prior art, and redundant descriptions will not be repeated) when the UE enters into the connected mode from the idle mode. In the Bearer Context synchronization procedure, the UE deletes all EPS Bearers of the PDN corresponding to the deactivate request according to the indication of the MME and notifies the MME after the deleting step is completed.

It should noted that, if the deleted APN is the Default APN of the UE in the above example, after the process of deactivating the PDN connections is completed, i.e. all EPS bearers connected to the PDN are deleted, the UE then initiates the UE Requested PDN Connectivity procedure when the UE finds that all EPS Bearers corresponding to its Default APN have been deleted and that the UE uses other PDN connections additionally, which has been defined in Chapter 5.10.2 in the specification TS23.401v8.2.0, and redundant descriptions will not be repeated. Wherein, the Default APN Indicator flag is used in the PDN Connectivity Request message sent from the UE, so as to indicate the MME to build the EPS Bearer of the Default APN. Therefore, the problem of rebuilding the Default APN connection is solved when the Default APN of the UE is deleted.

In addition, the message formats for delivering the requests or responses in the above examples are merely the manners used in, but not limited to, the preferred solutions. It should be appreciated that the requests or responses can also be delivered in other message formats or manners, and redundant descriptions will not be repeated.

Next, taking the specific realization of the methods and steps in the above examples in the system as an example, the methods in the above examples will be described in detail:

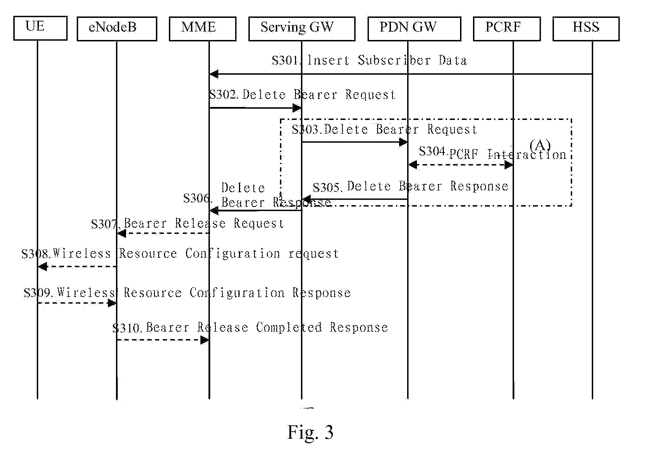

In Embodiment 2 of the present invention as shown in Figure 3, when the NAS signaling connection is made between the UE and MME, the releasing process of the PDN connection triggered by the HSS includes the following steps:
S301: the HSS sends the Insert Subscriber Data message to the current MME of the UE;
S302: the MME obtains that one APN currently used by the UE is deleted by the subscription data according to the message sent from the HSS, then it sends the Delete Bearer Request (TEID, LBI) message to the Serving GW to request to delete all EPS bearers connected to this PDN;
S303: the Serving GW sends the Delete Bearer Request (TEID, LBI) message to the PDN GW to request to delete all EPS bearers connected to this PDN;
S304: after the PDN GW deletes all EPS bearers connected to the PDN, it returns the Delete Bearer Response message back to the Serving GW;
S305: the PDN GW and PCRF interact with each other to indicate that the EPS bearers are released;
S306: the Serving GW returns the Delete Bearer Response message back to the MME;
S307: the MME sends the SAE Bearer Release Command message to the eNodeB to initiate the request to delete all wireless access bearers of this PDN. Meanwhile, the MME sends the Deactivate Bearer Request message to the UE. This SAE Bearer Release Command message includes the Deactivate Bearer Request message in the piggyback manner;
S308: the eNodeB sends the Wireless Resource Configuration request message to the UE to request the UE to delete corresponding wireless resource. Meanwhile, this request message piggyback the Deactivate Bearer Request message sent from the MME to the UE;
S309: after the UE deletes the corresponding bearers and wireless bearers, it returns the Wireless Resource Configuration Response message back to the eNodeB and returns the Deactivate Bearer Response message back to the MME. Wherein, this Wireless Resource Configuration Response message includes, in the piggyback manner, the Deactivate Bearer Response message sent from the UE to the MME;
S310: after the eNodeB receives the Wireless Resource Configuration Response message sent from the UE and releases corresponding wireless bearers and access bearers, it sends the SAE Bearer Release Complete message of the S1-MME interface to the MME. Meanwhile, this message includes, in the piggyback manner, the Deactivate Bearer Response message sent from the UE to the MME. And the releasing process of PDN connections is completed.

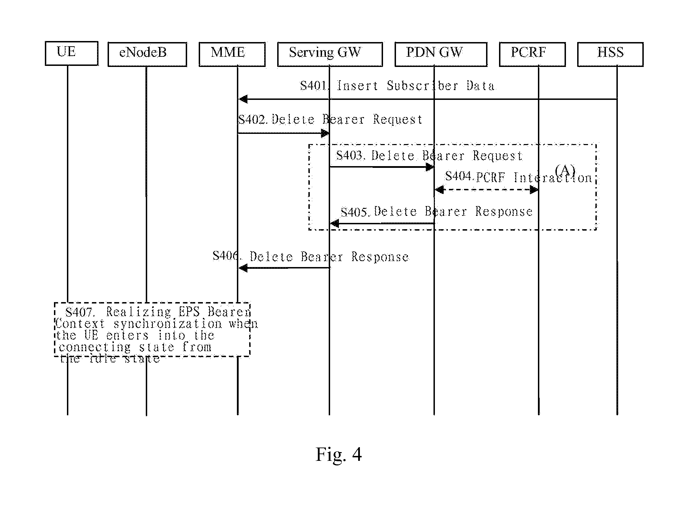

In Embodiment 3 of the present invention as shown in Figure 4, when the UE is in the idle state, the releasing process of PDN connections triggered by the HSS includes the following steps:
S401: the HSS sends the Insert Subscriber Data message to the current MME of the UE;
S402: the MME obtains that one APN currently used by the UE is deleted by the subscription data according to the message sent from the HSS, then it sends the Delete Bearer Request (TEID, LBI) message to the Serving GW to request to delete all EPS bearers connected to this PDN;
S403: the Serving GW sends the Delete Bearer Request (TEID, LBI) message to the PDN GW to request to delete all EPS bearers connected to this PDN;
S404: after the PDN GW deletes all EPS bearers connected to the PDN, it returns the Delete Bearer Response message back to the Serving GW;
S405: the PDN GW interacts with PCRF to indicate that the EPS bearers are released;
S406: the Serving GW returns the Delete Bearer Response message back to the MME;
S407: since the UE is in the idle state and does not establish the signaling connection with the MME, the MME cannot directly send the message to the eNodeB or UE at the moment. The signaling connection is established between the UE and MME and the EPS Bearer Context synchronization (this synchronization procedure can be realized in a manner in the prior art and redundant descriptions will not be repeated) is performed between the UE and MME when the UE enters into the connected state from the idle state. In the Bearer Context synchronization procedure, the UE deletes all EPS Bearers of the PDN corresponding to the deactivate request according to the indication of the MME and notifies the MME after the deleting step is completed.

In the above Embodiments 2 and 3, the S5/S8 interface between the Serving GW and PDN GW is based on the GTP protocol (GPRS Tunneling Protocol, GPRS, General Packet Radio Service Tunneling Protocol). If the S5/S8 interface uses the PMIP (Proxy Mobile IP) protocol, then the step corresponding to the mark (A) in the figures can be realized by the steps defined in the standard TS23.402, and redundant descriptions will not be repeated.

It can be seen that the problem that the UE is unable to initiate the releasing process of the PDN connections when the subscription data of the user changes and the problem of rebuilding the Default APN connection when the Default APN of the UE is deleted by the network are solved by triggering the releasing process of the PDN connections with the HSS using the methods in the present invention. And the change for the current system is small, while the system performance is improved. Meanwhile the system overhead is saved.

Based on the above thought, Embodiment 4 of the present invention further provides a Home Subscriber Server HSS, comprising a memory unit 501 and a triggering unit 502; wherein,

The memory unit 501 is configured to store the subscription data of the user and to notify the triggering unit 502 when the subscription data of the user changes;

The triggering unit 502 is configured to trigger the releasing of the PDN connections according to the notice of the memory unit 501.

And wherein, the triggering unit 502 further comprises: a first receiving unit and a first sending unit; the first receiving unit being configured to receive the notice from the memory unit; and the first sending unit being configured to send the Insert Subscriber Data message to the current MME of the UE according to the notice received by the first receiving unit to trigger the releasing of the PDN connections.

In addition, Embodiment 5 of the present invention further provides a Mobility Management Entity MME, comprising a first requesting unit 601 and a second requesting unit 602, wherein,

The first requesting unit 601 is configured to request the Serving GW and the Packet Data Network Gateway to delete all bearers connected to the PDN according to the notice triggering the releasing of PDN connections sent from the HSS, and to notify the second requesting unit 602 after the request operation is completed by the Serving GW and the Packet Data Network Gateway;

The second requesting unit 602 is configured to request the UE to deactivate all bearers connected to the PDN and to request the base station to delete all wireless access bearers connected to the PDN according to the notice of the first requesting unit 601.

And wherein, the second requesting unit further comprises a second sending unit and a second receiving unit; the second sending unit being configured to send the request to the base station to delete all wireless access bearers connected to the PDN, so as to notify the base station to release the corresponding wireless access bearers; and to send the request to the UE to deactivate all bearers connected to the PDN, so as to notify the UE to delete all bearers connected to the PDN; and the second receiving unit being configured to receive the response that the base station deletes all wireless access bearers connected to the PDN and the response that returned through the base station after the UE deletes all bearers connected to the PDN.

It should be noted that the apparatus in the above embodiments usually completes its corresponding functions in the Evolved Packet System. Therefore, the Evolved Packet System comprising the apparatus as described in the embodiments of the present invention should also be covered in the protection scope of the present invention and redundant descriptions will not be repeated.

The person skilled in the art should understand that any arbitrary one among different technologies and techniques can be used to represent the information, messages and signals. For instance, all the messages and information mentioned in the above descriptions can be represented as voltage, current, electromagnetic wave, magnetic field or magnetic particle, light field or a combination thereof.

The person skilled in the art should also realize that the units and algorithm steps in the examples in conjunction with the embodiments described in the present text can be accomplished by the electronic hardware, computer software or a combination of both. In order to clearly illustrate the interchangeability between the hardware and software, the compositions and steps in the each example have been described in general according to their functions in the above descriptions. The matter that whether the functions are executed by hardware or software depends upon the specific application and the constraint condition to the design in the technical solutions. The skilled person can realize the described functions using different methods for each particular application, while the realizations shall not be regarded as going beyond the scope of the present invention.

The method or algorithm steps described in the examples disclosed in the text can be implemented directly by hardware, processor-executed software module or a combination of both. The software module can be arranged into the random-access memory (RAM), memory, read-only memory (ROM), electrically programmable ROM, electrically erasable programmable ROM , register, hard disk, removable disk, CD-ROM or memory medium in any other form generally known in the art.

According to the above descriptions to the examples disclosed, the person skilled in the art can realize or utilize the present invention. Modifications to the examples will be obvious for the person skilled therein. The general principles defined in the text can be realized in other examples without departing from the spirits or scope of the present invention. Therefore, the present invention shall not be limited to these examples described in the text but should conform to the broadest scope consistent with the principles and novel characteristics disclosed in the text.

The above mentioned is merely the preferred examples of the present invention and not to limit the present invention. Any modification, equivalent substitution, improvement, etc. within the spirits and principles of the present invention, should be included in the protection scope of the present invention.

The embodiments of the present invention described above do not limit the protection scope of the present invention. Any modification, equivalent substitution, improvement, etc. within the spirits and principles of the present invention, should be included in the protection scope of the claims in the present invention.

## Claims

1. A method for releasing PDN connections, **characterized by** including the following steps:
the Home Subscriber Server HSS notifies a Mobility Management Entity MME to trigger the releasing of Packet Data Network PDN connections when subscription information of a user in the HSS changes;
the MME requests a Serving Gateway and a Packet Data Network Gateway to delete all bearers connected to the PDN according to a notification from the HSS; and
the MME requests UE to deactivate all bearers connected to the PDN.

2. The method according to claim 1, **characterized in that** the step of the MME requesting the UE to deactivate all bearers connected to the PDN including the following steps:
the MME initiates a request to a base station to delete all wireless access bearers connected to the PDN and simultaneously initiates a request to the UE to deactivate all bearers connected to the PDN;
the base station releases corresponding wireless access bearers according to the deleting request;
the UE returns a response back to the MME via the base station after the UE deletes corresponding bearer context according to the deactivating request.

3. The method according to claim 2, **characterized in that**,
the MME sends a Deactivate Bearer Request message of Non-Access Stratum to the UE via the base station to initiate a Deactivate Bearer Request; the Deactivate Bearer Request message is included in an S1-MME interface message of a request piggybacked by the MME to the base station to delete all wireless access bearers connected to the PDN;
the base station requests the UE to delete corresponding wireless resource by sending a Wireless Resource Configuration Request message to the UE; and the Deactivate Bearer Request message is piggybacked in the Wireless Resource Configuration Request message;
the UE returns a response by sending a Wireless Resource Configuration Response message to the base station; the UE sends a Deactivate Bearer Response message of the Non-Access Stratum to the MME via the base station; and the Deactivate Bearer Response message is piggybacked in the Wireless Resource Configuration Request message;
the base station notifies the MME, by sending an S1-MME interface response message to the MME, that deletion of all wireless access bearers connected the PDN has been completed; and the Deactivate Bearer Response message of the Non-Access Stratum sent from the UE to the MME is included in the S1-MME interface response message sent from the base station to the MME.

4. The method according to claim 1, **characterized in that** the step of the MME requesting the UE to deactivate all bearers connected to the PDN including the following steps:
the MME and the UE complete the Evolved Packet System Bearer Context synchronization when the MME and the UE enter into a connected mode from an idle mode,
in the Evolved Packet System Bearer Context synchronization procedure, the UE deletes all corresponding Bearer Context connected to the PDN according to a request of the MME.

5. The method according to any one of claims 1-4, **characterized in that** the method further including the following step:
the UE initiates a PDN connection request message when a Default Access Point Name of the UE is deleted, the request message including a Default Access Point Name Indicating flag.

6. The method according to any one of claims 1-4, **characterized in that**,
the HSS sends an Insert Subscriber Data message to a current MME of the UE so as to notify the MME that the subscription data of the user in the HSS has been changed.

7. The method according to any one of claims 1-4, **characterized in that** the step of the MME requesting the Serving GW and PDN GW to delete all bearers connected to the PDN including the following steps:
the MME sends a Delete Bearer Request message to the Serving GW to request to delete all bearers connected to the PDN;
the Serving GW sends a Delete Bearer Request message to the PDN GW to request to delete all bearers connected to the PDN;
the PDN GW receives the request message of the Serving GW and returns a Delete Bearer Response message back to the Serving GW after all bearers connected to the PDN are deleted; and
,the Serving GW returns the Delete Bearer Response message back to the MME after the Serving GW receives the response message of the PDN GW so as to notify the MME that the Serving GW and PDN GW have deleted all bearers connected to the PDN.

8. A Home Subscriber Server HSS, **characterized by** comprising a memory unit and a triggering unit; wherein,
the memory unit is configured to store subscription data of a user and to notify the triggering unit when the subscription data of the user changes; and
the triggering unit is configured to trigger the releasing of PDN connections according to a notice of the memory unit.

9. The HSS according to claim 8, **characterized in that** the triggering unit further comprising a first receiving unit and a first sending unit; wherein,
the first receiving unit is configured to receive the notice from the memory unit; and
the first sending unit is configured to send Insert Subscriber Data message to a current MME of UE according to the notice received by the first receiving unit so as to trigger the releasing of the PDN connections.

10. A Mobility Management Entity MME, **characterized by** comprising a first requesting unit and a second requesting unit, wherein,
the first requesting unit is configured to request Serving GW and Packet Data Network Gateway to delete all bearers connected to PDN according to a notice triggering the releasing of the PDN connections sent from the HSS, and to notify the second requesting unit after the request operation is completed by the Serving GW and the Packet Data Network Gateway; and
the second requesting unit is configured to request UE to deactivate all bearers connected to the PDN and to request a base station to delete all wireless access bearers connected to the PDN according to the notice of the first requesting unit.

11. The MME according to claim 10, **characterized in that** the second requesting unit further comprising a second sending unit and a second receiving unit; wherein,
the second sending unit is configured to send a request to the base station to delete all wireless access bearers connected to the PDN so as to notify the base station to release corresponding wireless access bearers; and simultaneously to send a request to the UE to deactivate all bearers connected to the PDN so as to notify the UE to delete all bearers connected to the PDN; and
the second receiving unit is configured to receive a response that the base station deletes all wireless access bearers connected to the PDN and a response that returned through the base station after the UE deletes all bearers connected to the PDN.

12. A system for releasing PDN connections, **characterized by** comprising the HSS according to any one of claims 8-9 and the MME according to any one of claims 10-11.
